# FASCICULE DE BREVET EUROPEEN

(11) **EP 0 384 094 B1**
(45) Date de publication et mention de la délivrance du brevet: **05.05.1993**
(21) Numéro de dépôt: 89450005.7
(22) Date de dépôt: 21.02.1989
(51) Int. Cl.: E01C 19/10

(54) **Procédé de fabrication d'enrobés denses bitumineux stockables**
Verfahren zum Herstellen von lagerungsfähigen bitumenumhüllten dichten Stoffen
Method for making storable bitumen coated dense products

(43) Date de publication de la demande: 29.08.1990
(73) Titulaire: Maheas, René, F-33270 Floirac (FR)
(72) Inventeur: Maheas, René, F-33270 Floirac (FR)
(74) Mandataire: Thébault, Jean-Louis

(56) Documents cités:
- WO-A-83/00700
- DE-B- 1 083 737
- FR-A- 2 117 156
- FR-A- 2 623 219
- US-A- 3 418 900

## Description

La présente invention concerne un procédé pour fabriquer des enrobés denses bitumineux stockables, destinés notamment à la confection ou la réfection de routes, pistes d'aérodrome, etc...

Actuellement, les enrobés denses stockables sont fabriqués en chauffant les matériaux et/ou le liant d'enrobage qui est en général un bitume fluxé ou fluidifié.

La granulométrie des enrobés denses est fixée par les courbes du Laboratoire Central des Ponts et Chaussées ou du Service d'Etudes Techniques des Routes et Aérodromes. Il s'agit de matériaux de granulométrie 0/D, c'est-à-dire allant de la poussière (0) à des éléments de diamètre D quelconque. En fait, pour les types d'enrobés concernés, le diamètre D est de l'ordre de 10 à 30 mm. Les matériaux 0/D couramment utilisés dans les enrobés contiennent de l'ordre de 5 à 10 % en poids d'éléments fins passant au tamis de 80 micromètres.

Brièvement, selon la technique connue, l'ensemble des matériaux 0/D est enrobé, soit à l'état froid, soit plus généralement après avoir été chauffés à une température comprise entre 120 et 150°C, avec un liant lui-même porté à une température de 100°C environ. Le temps de malaxage est de l'ordre de quelques dizaines de secondes.

Le liant habituellement utilisé est soit un bitume fluxé, c'est-à-dire un mélange de bitume et d'huile de goudron de houille, soit un bitume fluidifié, c'est-à-dire un bitume additionné de solvant(s) pétrolier(s).

Par exemple, par le document FR-A-2.117.156, on connaît un procédé d'enrobage d'agrégats minéraux à l'aide d'un liant bitumineux consistant à séparer les agrégats en une fraction grossière et une fraction fine, puis à enrober la fraction grossière à l'aide d'un film d'asphalte et, enfin, à ajouter la fraction fine en vue de recouvrir les surfaces des particules grossières déjà enrobées.

Cette technique nécessite des investissements importants du fait du chauffage, dans la plupart des cas, de la totalité de la masse des cailloux, des plus fins aux plus gros, à une température relativement élevée (120 à 150°C).

Par ailleurs, lorsque les éléments 0/D sont enrobés à l'état froid, l'enrobage se révèle difficile et l'on constate une répartition hétérogène du liant bitumineux se traduisant par un excès sur les matériaux les plus fins au détriment des éléments les plus gros, ayant pour conséquence l'obtention d'un revêtement inhomogène comportant des cailloux risquant de se détacher car non suffisamment collés par le bitume.

L'invention vise à pallier les divers inconvénients ci-dessus.

A cet effet, l'invention a pour objet un procédé de fabrication d'enrobés denses bitumineux stockables constitués de matériaux ou éléments 0/D enrobés dans un liant à base de bitume fluxé ou fluidifié, qui consiste :
à séparer lesdits matériaux en au moins deux granulométries, l'une regroupant les éléments les plus fins, l'autre, les éléments restants,
à enrober les éléments les plus fins à l'aide d'une première émulsion de liant bitumineux,
à enrober les éléments restants à l'aide d'une seconde émulsion de liant bitumineux d'une viscosité très sensiblement supérieure à celle de la première émulsion,
et à mélanger ensuite pendant quelques secondes l'ensemble des éléments 0/D.

De préférence, on sépare les matériaux en deux granulométries. Les éléments les plus fins seront ceux compris dans la plage comprise entre O et un diamètre maximal que l'on peut fixer entre 2 et 4 mm.

Les normes françaises de granulométries utilisées dans le domaine des matériaux routiers classant les éléments fins,soit en catégorie 0/2 mm, soit en catégorie 0/4 mm, par facilité on prendra comme éléments les plus fins, conformément au procédé de l'invention, soit les éléments 0/2 mm, soit les éléments 0/4 mm. Les éléments ayant une granulométrie supérieure à cette limite constitueront les seconds éléments. Bien entendu la frontière entre les deux sortes d'éléments n'a pas un caractère critique et la granulométrie maximale admise pour la catégorie des éléments dits fins pourra se situer entre 2 et 4 mm et même, selon les cas, sortir légèrement de cette plage, soit par le haut, soit par le bas.

Avantageusement, les éléments fins comporteront entre 16 et 20% environ de matériaux passant au tamis de 80 micromètres.

L'émulsion de liant bitumineux, fluxé ou fluidifié, pour l'enrobage des éléments fins (0/2 mm ou 0/4 mm) est de préférence, et par exemple, une émulsion cationique dont l'indice de rupture est supérieur à 120 et la viscosité du liant résiduel inférieure à 50 secondes, mesurée au viscosimètre S.T.V. (Standard Tar Viscosimeter). Cet appareil permet de mesurer, conformément à la norme française NF T 66 005 de mesure de la pseudo-viscosité des bitumes fluxés, un temps d'écoulement d'une certaine quantité de liant au travers d'un orifice calibré et à une température déterminée. La valeur de viscosité donnée ci-dessus correspond à un orifice de 10 mm et à une température de 25°C.

Le dosage de l'émulsion peut varier de 30 à 80 litres environ pour une tonne de matériaux. Le dosage dépend de l'usage qui doit être fait des enrobés, les couches supérieures de revêtements d'enrobés étant plus chargées en bitume.

Une fois enrobés les éléments fins sont stockés un certain temps, quelques heures à quelques jours par exemple, afin d'obtenir en particulier un bon collage du bitume sur les cailloux (mûrissement de l'enrobé). Ces enrobés peuvent être conservés en stock très longtemps, pratiquement indéfiniment, les éléments constitutifs ne s'agglomérant pas au stockage. Cela permet leur manipulation dans les trémies de stockage, dans des tapis de transfert ou dans des élévateurs. Ils se comportent comme des matériaux non enrobés.

L'enrobage des éléments restants (2/D mm ou 4/D mm selon le choix initial) est réalisé, de préférence et par exemple, à l'aide d'une émulsion cationique de bitume, fluxé ou fluidifé, présentant une viscosité nettement supérieure à celle du liant des éléments fins. La viscosité du liant résiduel de cette émulsion est par exemple comprise entre 1000 et 2000 secondes mesurée au viscosimètre S.T.V. dans les mêmes conditions que ci-dessus (10 mm, 25°C). On peut bien entendu sortir sensiblement de la plage de viscosité indiquée ci-dessus, aussi bien par le bas que par le haut. Le dosage de cette émulsion peut varier de 50 à 100 litres environ pour une tonne de matériaux.

Les liants utilisés pour les deux classes de matériaux (fins et autres) sont employés soit à froid, soit à chaud.

A la fin de la phase d'enrobage des éléments grossiers (2/D mm ou 4/D mm) on incorpore les éléments fins enrobés en continuant le malaxage pendant quelques secondes.

On obtient ainsi un enrobé 0/D mm parfaitement homogène et stockable à volonté.

La proportion des éléments fins par rapport aux éléments grossiers dans une tonne d'enrobé peut avoir des rapports très variables selon l'usage de cet enrobé.

La manière de procéder exposée ci-dessus est dite discontinue.

Le procédé de l'invention peut être également mis en oeuvre de manière continue en incorporant les éléments fins, préalablement enrobés, aux éléments grossiers en cours d'enrobage, plus particulièrement dans le dernier tiers de la phase d'enrobage.

Enfin, selon une variante du procédé, dans le cas où l'on voudrait utiliser pour l'enrobage des éléments grossiers des émulsions dont le liant résiduel serait supérieur à ceux indiqués, voire des émulsions de bitume pur, on enrobe les éléments fins à froid cependant que les éléments grossiers sont, préalablement à leur enrobage, chauffés à une température inférieure ou égale à 90°C, l'émulsion utilisée pour ces éléments grossiers étant froide ou chaude (inférieure ou égale à 90°C).

L'enrobé final obtenu selon cette variante est stockable moins longtemps avant sa mise en place que l'enrobé selon le procédé décrit plus haut, mais il, a l'avantage de durcir plus vite.

## Revendications

1. Procédé de fabrication d'enrobés denses bitumineux stockables constitués de matériaux ou éléments 0/D enrobés dans un liant à base de bitume fluxé ou fluidifié, qui consiste :
à séparer lesdits matériaux en au moins deux granulométries, l'une regroupant les éléments les plus fins, l'autre, les éléments restants,
à enrober les éléments les plus fins à l'aide d'une première émulsion de liant bitumineux,
à enrober les éléments restants à l'aide d'une seconde émulsion de liant bitumineux d'une viscosité très sensiblement supérieure à celle de la première émulsion,
et à mélanger ensuite pendant quelques secondes l'ensemble des éléments 0/D.

2. Procédé selon la revendication 1, caractérisé en ce que l'émulsion des éléments fins est une émulsion cationique d'indice de rupture supérieur à 120 et dont la viscosité du liant résiduel est inférieure à 50 secondes, mesurée au viscosimètre STV (10 mm, 25°C).

3. Procédé selon la revendication 2, caractérisé en ce que le dosage de l'émulsion est de l'ordre de 30 à 80 litres par tonne de matériaux.

4. Procédé selon la revendication 1, caractérisé en ce que l'émulsion des éléments restants ou grossiers est une émulsion cationique de bitume fluxé ou fluidifié dont la viscosité du liant résiduel est comprise entre 1000 et 2000 secondes environ, mesurée au viscosimètre STV (10 mm, 25°C).

5. Procédé selon la revendication 4, caractérisé en ce que le dosage de l'émulsion est de l'ordre de 50 à 100 litres par tonne de matériaux.

6. Procédé selon la revendication 1, caractérisé en ce que le mélange des éléments fins avec les autres éléments se fait au cours de la dernière phase d'enrobage de ces derniers.

7. Procédé selon l'une des revendications 1 à 6, caractérisé en ce que lesdits éléments restants ou grossiers sont chauffés à une température inférieure ou égale à 90°C.

8. Procédé selon la revendication 1, caractérisé en ce que les éléments fins sont dans la plage 0/4 mm et, de préférence, 0/2 mm.

9. Procédé selon l'une des revendications 1 à 8, caractérisé en ce que dans les éléments fins la proportion de matériaux passant au tamis de 80 micromètres est comprise entre 16 et 20% environ.

## Patentansprüche

1. Verfahren zum Herstellen von lagerungsfähigen, bitumenumhüllten, dichten Stoffen gebildet aus Materialien oder Elementen 0/D umhüllt von einem Bindemittel auf der Basis von fließfähigem oder verflüssigtem Bitumen, das darin besteht,
die besagten Materialien in wenigstens zwei Kornklassierungen zu trennen, von denen eine die feinsten Elemente und die andere die verbleibenden Elemente umgruppiert,
die feinsten Elemente mittels einer ersten Emulsion des bituminösen Bindemittels zu umhüllen,
die verbleibenden Elemente mittels einer zweiten Emulsion des bituminösen Bindemittels einer Viskosität sehr viel größer als diejenige der ersten Emulsion zu umhüllen, und
anschließend während einiger Sekunden die Gesamtheit der Elemente 0/D zu mischen.

2. Verfahren nach Anspruch 1, dadurch gekennzeichnet, daß die Emulsion für die feinen Elemente eine kationische Emulsion mit einem Brechindex oberhalb von 120 ist, bei der die Viskosität des zurückbleibenden Bindemittels unterhalb von 50 Sekunden, gemessen mit dem STV-Viskosimeter (10 mm, 25°C), ist.

3. Verfahren nach Anspruch 2, dadurch gekennzeichnet, daß die Dosierung der Emulsion in der Größenordnung von 30 bis 80 Liter pro Tonne Materialien ist.

4. Verfahren nach Anspruch 1, dadurch gekennzeichnet, daß die Emulsion für die verbleibenden oder groben Elemente eine kationische Emulsion von fließfähigem oder verflüssigtem Bitumen ist, bei der die Viskosität des zurückbleibenden Bindemittels etwa zwischen 1000 und 2000 Sekunden, gemessen mit dem STV-Viskosimeter (10 mm, 25°C) liegt.

5. Verfahren nach Anspruch 4, dadurch gekennzeichnet, daß die Dosierung der Emulsion in der Größenordnung von 50 bis 100 Liter pro Tonne Materialien ist.

6. Verfahren nach Anspruch 1, dadurch gekennzeichnet, daß die Mischung der feinen Elemente mit den anderen Elementen im Verlauf der letzten Phase des Umhüllens dieser letzteren vorgenommen wird.

7. Verfahren nach einem der Ansprüche 1 bis 6, dadurch gekennzeichnet, daß die besagten verbleibenden oder groben Elemente auf eine Temperatur unterhalb oder gleich 90°C erhitzt werden.

8. Verfahren nach Anspruch 1, dadurch gekennzeichnet, daß die feinen Elemente in dem Bereich 0/4 mm und vorzugsweise 0/2 mm liegen.

9. Verfahren nach einem der Ansprüche 1 bis 8, dadurch gekennzeichnet, daß bei den feinen Elementen der Anteil an Materialien, der ein Sieb von 80 Mikrometer passiert, etwa zwischen 16 und 20% liegt.

## Claims

1. Process for manufacturing storable dense bituminous layers formed from O/D materials or particles coated in a fluxed or fluidized bituminous binder, which consists in :
Separating the said materials into at least two sizes of particles, one of which contains the finest particles, the other the remaining particles ;
coating the finest particles using a first emulsion of bituminous binder ;
coating the remaining particles using a second emulsion of bituminous binder which has a significantly higher viscosity index than the first emulsion,
and mixing together all the O/D particles for several seconds.

2. Process as claimed in claim 1, characterized in that the emulsion of fine particles is a cationic emulsion, with a breaking index higher than 120 and of which the viscosity of the residual binder is lower than 50 seconds, measured with a standard tar viscometer (STV) (10mm, 25°C).

3. Process as claimed in claim 2, characterized in that the quantity of the emulsion is in the order of 30 to 80 litres per tonne of materials.

4. Process as claimed in claim 1, characterized in that the emulsion for the remaining, or larger particles is a cationic emulsion of fluxed or fluidized bitumen, of which the viscosity of the residual binder is between approximately 1000 and 2000 seconds, measured with a standard tar viscometer (STV) (10mm, 25°C).

5. Process as claimed in claim 4, characterized in that the quantity of the emulsion is in the order of 50 to 100 litres per tonne of materials.

6. Process as claimed in claim 1, characterized in that the fine particles are mixed with the other particles during the last phase of coating the other particles.

7. Process as claimed in any of claims 1 to 6, characterized in that the said remaining or larger particles are heated to a temperature equal to or below 90°C.

8. Process as claimed in claim 1, characterized in that the fine particles are in the range 0/4 mm and preferably, 0/2 mm.

9. Process as claimed in any of claims 1 to 8, characterized in that for the fine particles the proportion of materials which can pass through a 80 micrometer sieve is approximately 16-20 %.
